**Europäisches Patentamt**

**European Patent Office**

**Office européen des brevets**

(11) Veröffentlichungsnummer: **0 369 253 A2**

## (12) EUROPÄISCHE PATENTANMELDUNG

(21) Anmeldenummer: **89120357.2**

(22) Anmeldetag: **03.11.89**

(51) Int. Cl.5: **H01R 13/625, H01R 23/02**

(30) Priorität: **15.11.88 DE 3838665**

(43) Veröffentlichungstag der Anmeldung:
**23.05.90 Patentblatt 90/21**

(84) Benannte Vertragsstaaten:
**AT BE CH DE ES FR GB GR IT LI LU NL SE**

(71) Anmelder: **Gebhard, Dietrich**
**Erfurter Strasse 8**
**D-7502 Malsch 1(DE)**

(72) Erfinder: **Gebhard, Dietrich**
**Erfurter Strasse 8**
**D-7502 Malsch 1(DE)**

(74) Vertreter: **Witte, Alexander, Dr.-Ing. et al**
**Augustenstrasse 7**
**D-7000 Stuttgart 1(DE)**

(54) **Stecker für eine Steckverbindung für den elektrischen Anschluss von Kraftfahrzeuganhängern.**

(57) Ein Stecker für eine Steckverbindung für den elektrischen Anschluß von Kraftfahrzeuganhängern weist ein Gehäuse mit einem Bajonettanschlußteil (16) und eine darin aufgenommene Innenhülse (18) auf. Zum Sperren eines Relativdrehens zwischen Innenhülse (18) und Bajonettanschlußteil (16) ist eine Verriegelung vorgesehen, von der ein federndes Element zwischen Bajonettanschlußteil (16) und Innenhülse (18) angeordnet ist und von der ein herausragendes Teil (41) aus einer Öffnung im Bajonettanschlußteil (16) ragt. Zur einfacheren Montage und Erhöhung der Lebensdauer wird vorgeschlagen, das federnde Element und das herausragende Teil einstückig auszubilden.

Fig.4

EP 0 369 253 A2

## Stecker für eine Steckverbindung für den elektrischen Anschluß von Kraftfahrzeuganhängern

Die Erfindung betrifft einen Stecker für eine Steckverbindung für den elektrischen Anschluß von Kraftfahrzeuganhängern, mit einem Steckergehäuse, das einen Deckelteller zur Auflage für einen Steckdosendeckel aufweist, wobei das Steckergehäuse ein Bajonettanschlußteil zur Verbindung mit der Steckdose aufweist, mit einer im Gehäuse aufgenommenen Innenhülse, die relativ zum Bajonettanschlußteil verdrehbar ist, mit einem in der Innenhülse axial unverrückbar und mit dieser zusammen drehbar aufgenommenen Kontakteinsatz, sowie mit einer Verriegelung zum Verriegeln von Innenhülse und Bajonettanschlußteil bei abgezogenem Stecker, die beim Einführen des Bajonettanschlußteils in die Steckdose zwangsentriegelt wird, wobei die Verriegelung ein zwischen Bajonettanschlußteil und Innenhülse angeordnetes federndes Element aufweist, das mit einem aus einer Öffnung im Bajonettanschlußteil herausragenden Teil zusammenwirkt, das beim Einschieben des Steckers in die Steckdose radial bewegbar ist.

Ein derartiger Stecker ist aus der EP-A2-0 249 181 bekannt.

Derartige Stecker dienen dazu, eine elektrische Verbindung zwischen einem Kraftfahrzeug und einem Anhänger herzustellen. Dadurch sollen beispielsweise Rücklichter, Bremslichter od. dgl. des Anhängers mit Strom versorgt werden.

Das Steckergehäuse ist dabei am vorderen Ende mit einem Bajonettanschlußteil versehen, das in eine entsprechende Bajonettführung der Steckdose eingedrückt und durch Verdrehen in die Dose eingeführt werden kann. Die Innenhülse mit dem Kontaktteil wird bei dieser Bajonettverbindungsbewegung nicht verdreht, sondern in einer linearen Bewegung in die Dose eingeschoben. Bei der linearen Vorschubbewegung treten die Kontaktstifte des Kontaktteils mit entsprechenden Kontakthülsen in der Steckdose in Verbindung, wodurch dann ein Stromfluß hergestellt werden kann. Der Bajonettverschluß zwischen Steckergehäuse und Steckdose ist so ausgebildet, daß der Steckdosendeckel auf dem Deckelteller des Steckergehäuses zu liegen kommt. Der Schwenkwinkel der Relativbewegung zwischen Innenhülse und Bajonettanschlußteil beträgt meist 90°. Damit bei abgezogenem Stecker ein relatives Verdrehen zwischen Innenhülse und Bajonettanschlußteil nicht möglich ist, ist eine Verriegelung vorgesehen. Würden sich nämlich Bajonettanschlußteil und Innenhülse bei abgezogenem Stecker relativ zueinander verdrehen, so könnte der Stecker überhaupt nicht in die Steckdose eingesetzt werden.

Die Verriegelung des Steckers der eingangs genannten Art weist ein federndes Element in Form einer unter Spannung in einer äußeren Vertiefung der Innenhülse gehaltenen Blattfeder auf. Das radial abstehende bzw. herausragende Teil weist die Form eines Stiftes auf, der durch eine Öffnung im Bajonettanschlußteil radial nach außen ragt. Der Stift stützt sich dabei auf der Blattfeder ab und gleitet bei der Relativbewegung zwischen Bajonettanschlußteil und Innenhülse in umfänglicher Richtung über die Blattfeder.

Nachteilig an einer derartigen Verriegelung ist, daß sie aus mehreren Teilen besteht, wodurch die Montage des Steckers erschwert wird, da auf einen exakten Sitz von Stift einerseits und Blattfeder andererseits geachtet werden muß. Ferner ist nachteilig, daß durch die zweistückige Ausbildung Schmutzpartikel und Feuchtigkeit zwischen die Unterseite des Stiftes und die Aufstützstelle auf der Blattfeder gelangen kann. Durch die eingedrungenen Schmutzpartikel, meist Sand oder aufgeschlämmte Erde, ist es möglich, daß ein Relativbewegen von Stift und Blattfeder zueinander nicht mehr möglich ist, da diese Bauteile durch die Verschmutzung gegeneinander verkeilt werden. Ferner ist möglich, daß im Winter durch eingedrungenes Kondenswasser der Stift an der Blattfeder festfriert, somit diese nur sehr schwierig bewegbar sind. Die Schmutzpartikel in Form von Sand sorgen bei einer Ausbildung von Stift und Blattfeder aus Metall bei der Relativbewegung für einen erheblichen Abrieb, der die Korrosionsanfälligkeit starkt erhöht, so daß nach kurzer Zeit an der Reibstelle zwischen Stift und Blattfeder eine erhebliche Rostbildung zu erwarten ist. Auch bei Ausbildung mit Kunststoffmaterialien erfolgt durch die harten Sandkörner ein erheblicher Abrieb, der dazu führen kann, daß der Stift quasi abgeschliffen wird, so daß derjenige Teil, der aus der Öffnung am Bajonettanschlußteil herausragt, nach und nach zu kurz wird, d.h. nicht mehr ausreicht, um beim Eindrücken durch ein Verformen des federnden Elements die Verrastung zu lösen.

Aufgabe der vorliegenden Erfindung ist daher, einen Stecker der eingangs genannten Art derart zu verbessern, daß die Verriegelung auf Dauer funktionsfähig und einfach montierbar ist.

Erfindungsgemäß wird die Aufgabe dadurch gelöst, daß das federnde Element und das herausragende Teil als einstückiges Bauteil ausgebildet sind.

Durch diese Maßnahme ist sichergestellt, daß keine Verschmutzungen oder Feuchtigkeit zwischen herausragendem Teil und federnden Element eindringen können. Dadurch ist auch eine Relativbewegung zwischen diesen Teilen ausgeschlossen, so daß Abrieberscheinungen und damit verbundene Korrosionsanfälligkeit vermieden werden. Das gesamte Bauteil wird zwangsweise von dem Bajonettanschlußteil bei der Verdrehbewegung mitgeführt. Durch die Einstückigkeit ist auch die Montage äußerst erleichtert, da das Teil lediglich von innen an das Bajonettanschlußteil angelegt werden muß, wobei das herausragende oder abstehende Teil durch die Öffnung hindurchgeschoben werden muß. Nach Eindrücken der Innenhülse ist das gesamte Bauteil unverlierbar zwischen Innenhülse und Bajonettanschlußteil gehalten. Durch das vom federnden Element abspringende Teil ist ein einfaches Montiermerkmal gegeben, so daß auch ohne größere Aufmerksamkeit das Bauteil exakt sitzend eingebaut werden kann.

Somit wird die Aufgabe vollkommen gelöst.

In einer vorteilhaften Ausgestaltung ist das einstückige Bauteil aus einem elastischen Kunststoffmaterial hergestellt.

Diese Maßnahme hat den Vorteil, daß ein kostengünstiges und gegenüber Feuchtigkeit korrosionsbeständiges Bauteil geschaffen ist.

In einer weiteren vorteilhaften Ausgestaltung ist ein Basisteil des einstückigen Bauteils in einem Bereich zwischen zwei umfänglich auf der Außenseite der Innenhülse angeordneten Auflagepunkten durchbiegbar ausgebildet, wobei zumindest auf einer Seite des Bereiches sich das Basisteil als Fortsatzstück fortsetzt, wobei das zumindest eine Fortsatzstück beim Durchbiegen des Bereichs in Richtung Innenseite des Bajonettanschlußteils verschwenkbar ist.

Diese Maßnahme hat den Vorteil, daß ein nicht vorgespanntes Bauteil verwendet werden kann, das erst durch den Eindrückvorgang bzw. durch das damit verbundene Durchbiegen im Bereich zwischen den Auflagestellen die notwendige Spannkraft zur Rückstellung des abstehenden Teils erfährt. Das seitlich um die eine Auflagestelle verschwenkbare Fortsatzstück kann durch entsprechend lange Ausbildung aufgrund der Hebelwirkung schon durch eine relativ kurze Eindrückbewegung zwischen einer sperrenden und einer freigebenden Stellung hin- und herverschwenkt werden.

Diese Maßnahme hat insbesondere auch den Vorteil, daß das Bauteil bei abgezogenem Stecker nicht oder nur unter geringer Vorspannung steht. Dadurch kann einer Materialermüdung durch Kriechen von vorgespanntem Material entgegengewirkt werden, wodurch sich die Lebensdauer der Verriegelung erhöht.

In einer bevorzugten Ausgestaltung der Erfindung sind die beiden Auflagestellen des Basisteils symmetrisch beidseits des herausragenden Teils angeordnet.

Diese Maßnahme hat den Vorteil, daß das herausragende Teil bei der Eindrückbewegung ohne zu kippen, d.h. ohne sich mit der Öffnung zu verkanten, radial bewegbar ist.

In einer weiteren vorteilhaften Ausgestaltung liegt eine äußere Kante des Fortsatzstückes an einer Schulter in der Außenseite der Innenhülse und die gegenüberliegende äußere Kante des Basisteils an einer Schulter in der Innenseite des Bajonettanschlußteils.

Diese Maßnahme hat den Vorteil, daß die Kräfte, die bei einem ungewollten Verdrehenwollen von Bajonettanschlußteil und Innenhülse, die auf das die Sperrung bewirkende Bauteil einwirken, von diesem in Umfangsrichtung über gegenüberliegende Außenkanten übertragen werden. Dadurch findet eine Entlastung des vom federnden Teil radial abstehenden Teils dahingehend statt, daß dieses nicht durch diese umfänglichen Kräfte gegen die eine oder die andere Innenkante der Öffnung gedrückt wird, durch die das abstehende Teil hindurchreicht. Dadurch ist das abstehende Teil mit einem geringen seitlichen Spiel reibungsfrei in der Öffnung gehalten, so daß es ohne zusätzlichen Kraftaufwand zur Überwindung einer Reibungskraft eingedrückt werden kann. Dies trägt auch zur Erhöhung der Lebensdauer der Verriegelung bei.

In einer weiteren vorteilhaften Ausgestaltung ruht das Basisteil beim Durchbiegen des Bereichs auf zwei radialen Vorsprüngen an der Außenseite der Innenhülse.

Diese Maßnahme hat den Vorteil, daß durch einfache konstruktive Maßnahmen die Auflagerstellen exakt vorbestimmt werden können.

In einer weiteren vorteilhaften Ausgestaltung der Erfindung ist das Basisteil an der der Innenhülse zugewandten Seite mit zwei radialen Erhebungen versehen, über die das Basisteil beim Durchbiegen des Bereichs auf der Außenseite der Innenhülse ruht.

Diese Maßnahme hat den Vorteil, daß die Auflagerpunkte abhängig von der Elastizität des Materials des Bauteils gelegt werden können. Dies ist dann im Gegensatz zu der zuvor erwähnten Konstruktion in dieser Hinsicht unabhängig von der Ausbildung der Außenseite der Innenhülse.

In einer weiteren vorteilhaften Ausgestaltung der Erfindung ist das Basisteil als sich in Umfangsrichtung erstreckender Streifen ausgebildet, von dessen äußerer Umfangsseite sich radial nach außen ein quaderförmiger Vorsprung wegerstreckt, der das herausragende Teil bildet, wobei der Vorsprung mit einer Auflaufschräge versehen ist.

Diese Maßnahme hat den Vorteil, daß ein besonders kostengünstig herzustellendes Bauteil geschaffen ist, das in hohen Stückzahlen als einfach geformtes Spritzgußteil herstellbar ist. Die Auflaufschräge erleichtert in an sich bekannter Weise den Eingriffsvorgang zwischen herausragendem Teil und entsprechendem Teil in der Steckdose, das ein in Richtung Längsmittelachse des Steckers gerichtetes Hineindrücken des herausragenden Teils verursacht.

In einer weiteren vorteilhaften Ausgestaltung der Erfindung ist das herausragende Teil umfänglich mit einer weichelastischen Überzugschicht versehen. Diese Maßnahme hat den Vorteil, daß durch die weichelastische Überzugschicht eine Dichtung mit der das herausragende Teil umgebenden Öffnungskante sichergestellt ist. Dadurch ist ausgeschlossen, daß Verschmutzungen oder Feuchtigkeit durch die notwendige Öffnung im Bajonettanschlußteil in den Innenraum des Steckers eindringen können.

Es versteht sich, daß die vorstehend genannten und die nachstehend noch zu erläuternden Merkmale nicht nur in der jeweils angegebenen Kombination, sondern auch in anderen Kombinationen und in Alleinstellung einsetzbar sind, ohne den Rahmen der vorliegenden Erfindung zu verlassen.

Die Erfindung wird nachfolgend anhand einiger ausgewählter Ausführungsbeispiele in Zusammenhang mit den beiliegenden Zeichnungen näher beschrieben und erläutert. Es zeigen:

Figur 1 eine stirnseitige Ansicht eines erfindungemäßen Steckers,

Figur 2 einen Schnitt längs der Linie II-II in Fig. 1,

Figur 3 eine vergrößerte teilweise Darstellung des Schnitts von Fig. 2,

Figur 4 einen Schnitt längs der Linie IV-IV in Fig. 3,

Figur 5 eine entsprechende Darstellung wie Fig. 4, jedoch in einer anderen Arbeitsstellung der Verriegelung,

Figur 6 einen Schnitt eines weiteren Ausführungsbeispiels eines Bauteils eines erfindungsgemäßen Steckers, und

Figur 7 einen Schnitt eines dritten Ausführungsbeispiels eines Bauteils eines erfindungsgemäßen Steckers.

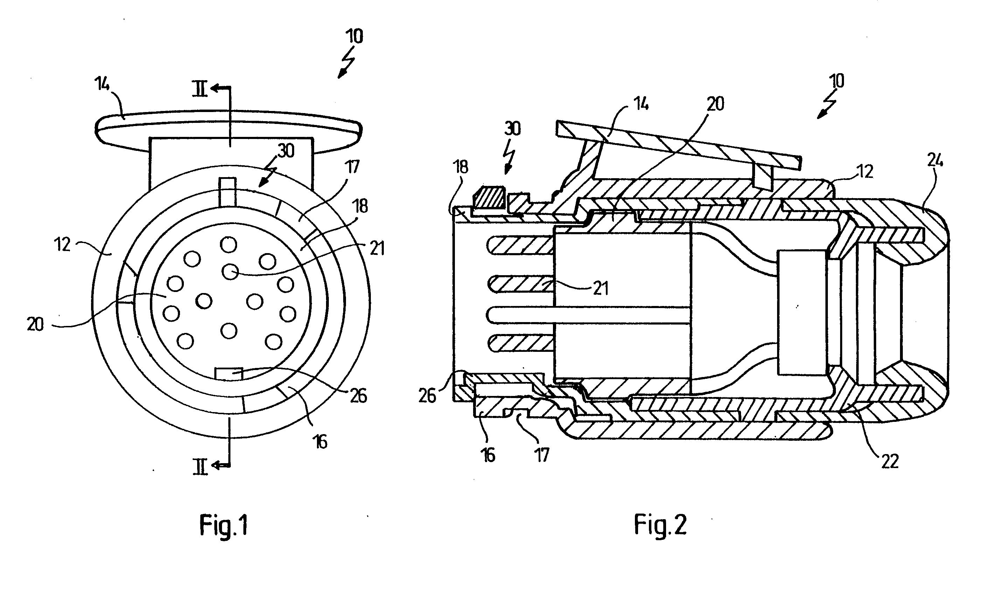

Ein in den Fig. 1 bis 5 dargestelltes Ausführungsbeispiel eines erfindungsgemäßen Steckers 10 weist ein Steckergehäuse 12 auf, dessen Außenseite mit einem Deckelteller 14 (der Übersicht halber nur in Fig. 1 und 2 dargestellt) versehen ist.

Der Deckelteller 14 dient als Auflagefläche für die Innenseite eines aufgeklappten Deckels einer Steckdose, in die der Stecker 10 eingeschoben werden soll.

Das Steckergehäuse 12 weist an seinem vorderen Ende, über das er in die Steckdose eingeschoben werden soll, ein Bajonettanschlußteil 16 auf. Das Bajonettanschlußteil 16 ist an seiner Außenseite mit mehreren schlangenlinienförmigen Aussparungen 17 versehen, in die entsprechende Vorsprünge an der Innenseite der Steckdose eingreifen, wodurch dann ein Verdrehen, beipielsweise um 90°, des Steckergehäuses 12 samt Bajonettanschlußteil 16 um eine Innenhülse 18 erzwungen wird.

Soll beispielsweise der Stecker 10 in der in Fig. 1 dargestellten Position in einer Steckdose aufgenommen werden, so befindet sich der Deckelteller 14 vor dem Einstecken um 90° im Uhrzeigersinn verschwenkt.

Im Steckergehäuse 12 ist die Innenhülse 18 aufgenommen, die passend, jedoch relativ zum Steckergehäuse 12 um 90° verdrehbar aufgenommen ist. Die maximale Drehbewegung in beiden Richtungen ist durch hier nicht näher dargestellte Endanschläge begrenzt.

Die Innenhülse 18 überragt das Bajonettanschlußteil 16 am vorderen Ende in einem durchmessergrößeren Bereich und liegt außerdem an einer Innenschulter an der Innenseite des Steckergehäuses 12 an, so daß die durch Pressung in das Steckergehäuse 12 eingebrachte Innenhülse 18 axial unverrückbar in dieser aufgenommen ist.

In der Innenhülse 18 ist ein Kontakteinsatz 20 aufgenommen, der Stifte 21 trägt, die über hier nicht dargestellte Kabeladern zu einem endseitig aus dem Steckergehäuse 12 austretenden Kabelstrang zusammengefaßt sind.

Zur axialen Fixierung des Kontakteinsatzes 20 in der Innenhülse 18 ist ein Zwischenstück 22 vorgesehen, das mit der Innenseite des Steckergehäuses 12 bzw. mit der Innenseite der Innenhülse 18 verschraubt bzw. verrastet ist. Der Kontakteinsatz 20 sitzt axial unverrückbar und drehsicher in der Innenhülse 18, d.h. wird die Innenhülse 18 gedreht, dreht sich auch damit der Kontakteinsatz 20.

Eine Schraubkappe 24 bildet einen endseitigen Abschluß des Steckergehäuses, wobei durch die mittige Öffnung der Schraubkappe 24 der Kabelstrang dicht gehalten ist und, wie zuvor erwähnt, aus dem Steckergehäuse 12 austritt.

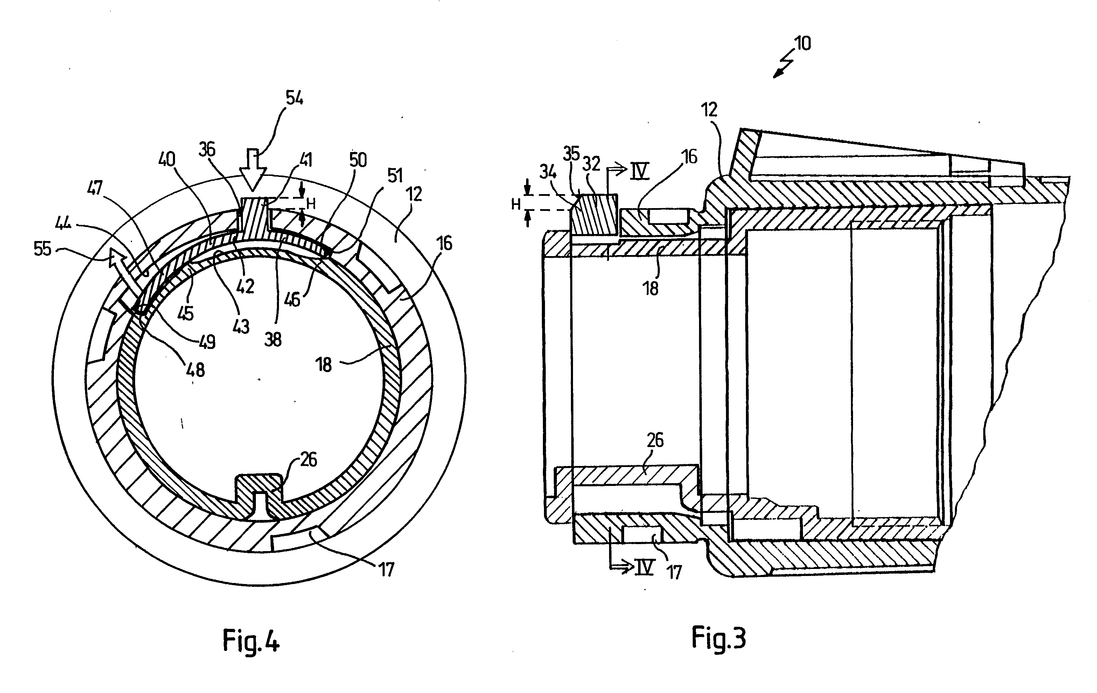

Im Bereich des Bajonettanschlußteils 16 ist zwischen dessen Innenseite und der Innenhülse 18 eine Verriegelung 30 vorgesehen. Zur deutlicheren Darstellung der Bauteile der Verriegelung 30 und deren Arbeitsweise sind in den Fig. 3 bis 5 vergrößerte Schnitte eines Steckers 10 dargestellt, bei dem der Übersicht halber der Kontakteinsatz 20 und der Deckelteller 14 weggelassen sind.

Die Verriegelung 30 weist ein federndes Element 32 und ein abstehendes Teil 34 auf, die als einstückiges Bauteil 38 ausgebildet sind.

Das abstehende Teil 34 reicht durch eine Öffnung 36 im Bajonettanschlußteil 16 durch und ragt über dessen äußere Umfangsfläche um einen Betrag H hinaus.

Das Bauteil 38 weist ein Basisteil 40 auf, das als etwa rechteckförmiger Streifen ausgebildet ist. Vom Basisteil 40 erhebt sich ein quaderförmiger Vorsprung 41, dessen über die äußere Umfangsseite des Bajonettanschlußteils 16 hinausragender Teil, das abstehende Teil 34 bildet. Das Bauteil 38 ist als Spritzgußteil aus Kunststoffmaterial hergestellt.

Das Basisteil 40 ist zwischen einer Ausnehmung 43 in der Außenseite der Innenhülse 18 und einer Ausnehmung 44 in der Innenseite des Bajonettanschlußteils 16 aufgenommen.

In der Ausnehmung 43 an der Außenseite der Innenhülse 18 sind symmetrisch beidseits der Öffnung 36 zwei radiale Vorsprünge 45 und 46 angeordnet.

Der radiale Vorsprung 46 bildet dabei ein, in der Darstellung von Fig. 4 rechts äußeres Ende der Ausnehmung 43. Die Ausnehmung 43 erstreckt sich jedoch in der Darstellung von Fig. 4 links vom radialen Vorsprung 45 weiter fort und endet in einer Schulter 48.

Das streifenförmige Basisteil 40 weist in Umfangsrichtung eine solche Länge auf, daß es sich vom radialen Vorsprung 46 bis zur Schuler 48 erstreckt. Dabei liegt eine äußere linke Kante 49 des Basisteils 40 an der Schulter 48 an. Eine der Kante 49 gegenüberliegende äußere Kante 50 des Basisteils 40 liegt an einer Schulter 51, die eine rechte äußere Begrenzung der Ausnehmung 44 an der Innenseite des Bajonettanschlußteils 16 darstellt. Das Basisteil 40 liegt somit passend, gegebenenfalls mit geringer Spannung, zwischen der Schulter 48 und der Schulter 51. Dadurch ist ein relatives Verdrehen zwischen Innenhülse 18 und Bajonettanschlußteil 16 gehindert, d.h. die beiden Teile sind gegeneinander verriegelt.

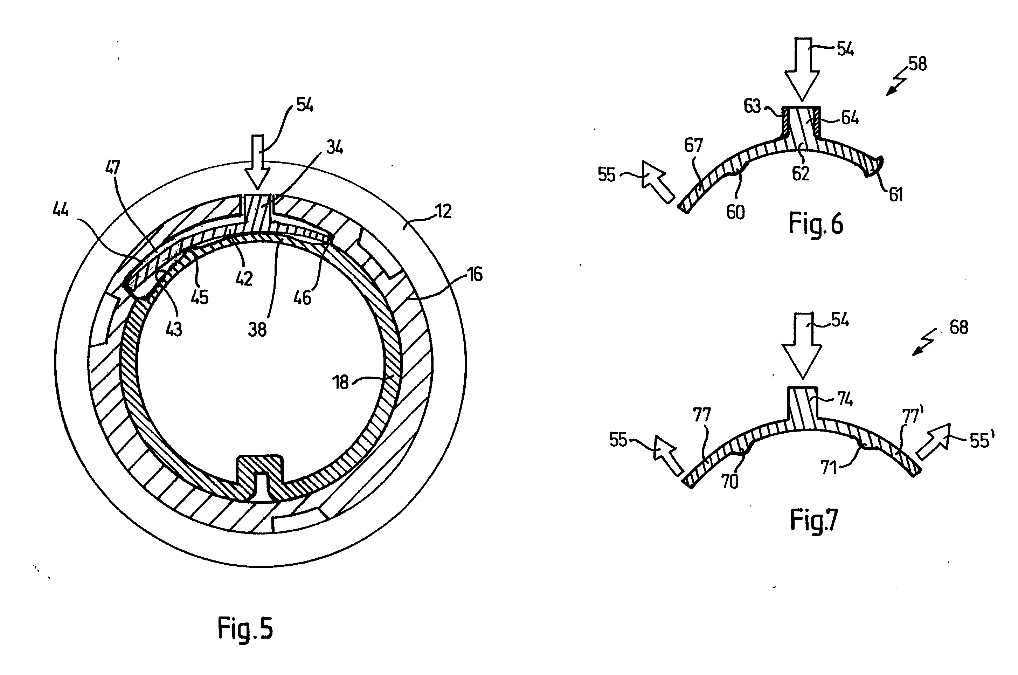

Soll die Verriegelung 30 entriegelt werden, erfolgt dies zwangsweise dadurch, daß der Stecker 10 in eine Steckdose eingeschoben wird und ein entsprechendes Bauteil an der Steckdose mit einer Auflaufschräge 34 des quaderförmigen Vorsprungs 41 in Berührung kommt und diesen in Richtung Längsmittelachse des Steckers 10 drückt, wie dies in Fig. 4 und 5 durch einen Pfeil 54 dargestellt ist. Dabei kommt das Basisteil 40 mit seiner Unterseite auf den radialen Vorsprüngen 45 und 46 zum Liegen.

Ein zwischen diesen Vorsprüngen 45 und 46 liegender Bereich 42 des Basisteils 40 wird bei weiterem Herabdrücken entgegen dem Krümmungsradius des Basisteils 40 verbogen, wodurch ein zwischen radialem Vorsprung 45 und Schulter 48 gelegenes Fortsatzstück 47 des Basisteils 40 im Uhrzeigersinn verschwenkt wird, wie dies in Fig. 4 durch einen Pfeil 55 dargestellt ist.

Die Verschwenkachse bildet dabei der Berührungspunkt zwischen Basisteil 40 und radialem Vorsprung 45.

Bei dieser Verschwenkbewegung bewegt sich das Fortsatzstück 47 von der Außenseite der Innenhülse 18 weg in Richtung Innenseite des Bajonettanschlußteils 16, und zwar in die darin vorgesehene Ausnehmung 44 hinein.

Diese Stellung ist in Fig. 5 dargestellt.

In dieser Stellung liegt das Basisteil 40 mit seinen beiden gegenüberliegenden Kanten jeweils an den äußeren seitlichen Schultern der Ausnehmung 44 im Bajonettanschlußteil 16 an, so daß die Sperrwirkung aufgehoben ist, und die Innenhülse 18 und das Bajonettanschlußteil 16 um den gewünschten Winkel von 90° relativ zueinander verdreht werden können.

Wird diese Verschwenkbewegung rückgängig gemacht, wobei dieses zwangsweise beim Herausziehen des Steckers aus der Steckdose erfolgt, wird wiederum die in Fig. 5 dargestellte Position erreicht. Durch die durch das Durchbiegen des Bereichs 42 zwischen den Auflagepunkten auf den radialen Vorsprüngen 45 und 46 erzeugte Spannung wird der quaderförmige Vorsprung 41 aus der Öffnung 36 herausgedrückt und gleichzeitig das Fortsatzstück 47 von der in Fig. 5 dargestellten Position zu der in Fig. 4 dargestellten Stellung verschwenkt. Dann ist wieder die Innenhülse 18 mit dem Bajonettanschlußteil 16 verriegelt.

In Fig. 6 ist ein Schnitt einer weiteren Ausführung eines Bauteils 58 dargestellt. Das Bauteil 58 ähnelt im Aufbau dem Bauteil 38, ist jedoch an seiner Unterseite, die der Mittellängsachse des Steckers 10 zugewandt ist, mit zwei Erhebungen 60, 61 versehen. Bei dieser Ausführung sind dann an der Außenseite der Innenhülse 18 keine radialen Vorsprünge 45 bzw. 46 vorgesehen.

Bei einer nach unten gerichteten Bewegung, wie dies in Fig. 6 durch den Pfeil 54 angedeutet ist, kommen die Erhebungen 60 bzw. 61 alsbald auf der Oberfläche der Ausnehmung 43 in der Außenseite der Innenhülse 18 zum Liegen, und der dazwischen liegende Bereich 62 wird, wie zuvor beschrieben, verbogen. Dadurch wird ein Fortsatzstück 67 im Uhrzeigersinn verschwenkt, wie dies durch einen Pfeil 55 angedeutet ist, somit gleich wie zuvor in Zusammenhang mit Fig. 4 und 5 beschrieben.

Das abstehende Teil 64 des Bauteils 58 ist umfänglich mit einer weichelastischen Überzugsschicht 63 versehen, die für einen seitlich dichtenden Abschluß mit der umlaufenden Kante der Öffnung 36 sorgt.

In Fig. 7 ist ein weiteres Ausführungsbeispiel eines Bauteils 68 dargestellt, das ähnlich wie das in Fig. 6 beschriebene Bauteil 58 dargestellt ist, jedoch mit dem Unterschied, daß sich beidseits der Erhebungen 70, 71 an der Unterseite jeweils ein Fortsatzstück 77 bzw. 77′ anschließt.

Wird auf das abstehende Teil 74 des Bauteils 58 von oben, wie dies durch einen Pfeil 54 in Fig. 7 dargestellt ist, gedrückt, so werden nach Aufliegen der Erhebungen 70, 71 auf der Außenseite der Innenhülse 18 und mit einsetzender Deformierung des Bereiches zwischen den Erhebungen 70 und 71 beide Fortsatzstücke 77, 77' verschwenkt, wobei das Fortsatzstück 77 im Uhrzeigersinn, wohingegen das Fortsatzstück 77' entgegen dem Uhrzeigersinn, wie dies durch einen Pfeil 55' in Fig. 7 angedeutet ist, verschwenkt wird. Bei dieser Ausführung sind entsprechende Ausnehmungen 43 bzw. 44 an Innenhülse 18 bzw. Bajonettanschlußteil 16 länger ausgebildet, und das Bauteil 68 liegt beidseits an Schultern in der Ausnehmung in der Außenseite der Innenhülse an. Bei dieser Ausführung muß das abstehende Teil 74 die Übertragung der Kräfte bei einem Verdrehenwollen von Innenhülse 18 und Bajonettanschlußteil 16 in der gesperrten Stellung übernehmen.

**Ansprüche**

1. Stecker für eine Steckverbindung für den elektrischen Anschluß von Kraftfahrzeuganhängern, mit einem Steckergehäuse (12), das einen Deckelteller (14) zur Auflage für einen Steckdosendeckel aufweist, wobei das Steckergehäuse (12) einen Bajonettanschlußteil (10) zur Verbindung mit der Deckdose aufweist, mit einer im Gehäuse (12) aufgenommenen Innenhülse (18), die relativ zum Bajonettanschlußteil (16) verdrehbar ist, mit einem in der Innenhülse (18) axial unverrückbar und mit dieser zusammen drehbar aufgenommenen Kontakteinsatz (20), sowie mit einer Verriegelung (30) zum Verriegeln von Innenhülse (18) und Bajonettanschlußteil (16) bei abgezogenem Stecker (10), die beim Einführen des Bajonettanschlußteils (16) in die Steckdose zwangsentriegelt wird, wobei die Verriegelung (30) ein zwischen Bajonettanschlußteil (16) und Innenhülse (18) angeordnetes federndes Element (32) aufweist, das mit einem aus einer Öffnung (36) im Bajonettanschlußteil (16) herausragenden Teil (34) zusammenwirkt, zusammenwirkt, das beim Einschieben des Steckers (10) in die Steckdose radial bewegbar ist, dadurch gekennzeichnet, daß das federnde Element (32) und das herausragende Teil (34) als einstückiges Bauteil (38, 58, 68) ausgebildet sind.

2. Stecker nach Anspruch 1, dadurch gekennzeichnet, daß das einstückige Bauteil (38, 58, 68) aus einem elastischen Kunststoffmaterial hergestellt ist.

3. Stecker nach Anspruch 1 oder 2, dadurch gekennzeichnet, daß ein Basisteil (40) des einstückigen Bauteils (38) in einem Bereich (42) zwischen zwei umfänglich auf der Außenseite der Innenhülse (18) angeordneten Auflagepunkten (45, 46; 60, 61; 70, 71) durchbiegbar ausgebildet ist, wobei zumindest auf einer Seite des Bereichs (42) sich das Basisteil (40) als Fortsatzstück (47) fortsetzt, wobei das zumindest eine Fortsatzstück (47) beim Durchbiegen des Bereichs (42) in Richtung Innenseite des Bajonettanschlußteils (16) verschwenkbar ist.

4. Stecker nach Anspruch 3, dadurch gekennzeichnet, daß die beiden Auflagepunkte (45, 46; 60, 61; 70, 71) des Basisteils (40) symmetrisch beidseits des herausragenden Teils (34) angeordnet sind.

5. Stecker nach Anspruch 3 oder 4, dadurch gekennzeichnet, daß in Verriegelungsstellung eine äußere Kante (49) des Fortsatzstücks (47) an einer Schulter (48) in der Außenseite der Innenhülse (18), und die gegenüberliegende äußere Kante (46) des Basisteils (40) an einer Schulter (51) in der Innenseite des Bajonettanschlußteils (16) liegt.

6. Stecker nach einem der Ansprüche 1 bis 5, dadurch gekennzeichnet, daß das Basisteil (40) beim Durchbiegen des Bereichs (42) auf zwei radialen Vorsprüngen (45, 46) an der Außenseite der Innenhülse (18) ruht.

7. Stecker nach einem der Ansprüche 1 bis 5, dadurch gekennzeichnet, daß das Basisteil (40) an der der Innenseite (18) zugewandten Seite mit zwei radialen Erhebungen (60, 61; 70, 71) versehen ist, über die das Basisteil beim Durchbiegen des Bereichs (62) auf der Außenseite der Innenhülse (18) ruht.

8. Stecker nach einem der Ansprüche 3 bis 7, dadurch gekennzeichnet, daß das Basisteil (40) als sich in Umfangsrichtung erstreckender Streifen ausgebildet ist, von dessen äußerer Umfangsseite sich radial nach außen ein quaderförmiger Vorsprung (41) wegerstreckt, der das herausragende Teil (34) bildet, wobei der Vorsprung mit einer Auflaufschräge (35) versehen ist.

9. Stecker nach einem der Ansprüche 1 bis 8, dadurch gekennzeichnet, daß das herausragende Teil (64) umfänglich mit einem weichelastischen Überzug (63) versehen ist, der als Dichtung zwischen herausragendem Teil (64) und Öffnung (36) im Bajonettanschlußteil (16) dient.

Fig.2

Fig.1

EP 0 369 253 A2

Fig.4

Fig.3

Fig.6

Fig.7

Fig.5